# EUROPÄISCHE PATENTSCHRIFT

(11) **EP 0 384 158 B1**
(45) Veröffentlichungstag und Bekanntmachung des Hinweises auf die Patenterteilung: **27.10.1993**
(21) Anmeldenummer: 90101640.2
(22) Anmeldetag: 27.01.1990
(51) Int. Cl.: G05G 3/00, F16H 59/04

(54) **Schwinggabel für Schaltgetriebe von Kraftfahrzeugen**
Rocker fork for motor vehicle shift transmissions
Fourchette pivotante pour boîtes de vitesses de véhicules

(30) Priorität: 21.02.1989 DE 8902040 U
(43) Veröffentlichungstag der Anmeldung: 29.08.1990
(73) Patentinhaber: Griesemer, Albert, D-56457 Westerburg (DE)
(72) Erfinder: Griesemer, Albert, D-56457 Westerburg (DE)
(74) Vertreter: Grommes, Karl F., Dr.

(56) Entgegenhaltungen:
- DE-A- 2 456 962
- DE-A- 2 805 044
- DE-A- 3 131 580
- DE-A- 3 543 057
- DE-B- 2 547 476
- US-A- 4 265 137

## Beschreibung

### Technisches Gebiet

Die Erfindung betrifft eine Schwinggabel für Schaltgetriebe von Kraftfahrzeugen, welche im wesentlichen U-förmig ausgebildet ist, wobei sie mit ihren beiden Seitenteilen gelenkig mit einem Lagerbock verbunden ist und an ihrer Schulter einen rechtwinklig abstehenden Schaltnocken aufweist und wobei die Schwinggabel an ihrer Schulter mit einer Ausnehmung versehen ist und der Schaltnocken an seinem unteren Ende eine zapfenförmige Verlängerung aufweist.

Ein derartiges Bauteil, wie es für höhere Gänge, namentlich für den fünften Gang, eingesetzt wird, muß in der Regel hohe Schaltkräfte übertragen. Es muß deshalb zum einen sehr stabil und zum anderen äußerst maßgenau ausgeführt werden, soll es nicht zu unerwünschten Betriebsstörungen kommen.

### Stand der Technik

Diesen Anforderungen genügen vor allem Gußteile, bei denen der Schaltnocken von vornherein einstückig mit der Schwinggabel verbunden ist. Es kann sich dabei insbesondere um Teile aus Temperguß bzw. Aluminium-Druckguß handeln.

Allerdings müssen jene Teile (Rohgußteile) im Interesse ihrer Maßhaltigkeit unbedingt einer mechanischen Nachbehandlung, d. h. einer sehr präzisen spanabhebenden Bearbeitung unterworfen werden. Damit wird aber die Herstellung solcher Teile sehr teuer.

Darüber hinaus ist auch eine zweistückige Ausführungsform gemäß dem Oberbegriff durch die DE-A-2 805 044 bekannt. Sie bezweckt eine gewisse Leichtgängigkeit und beinhaltet eine spezielle Führung der Schubstangen, welche u. a. radienförmige Rücken und Kugelbolzen an den Schaltschwingen (Schwinggabeln) umfaßt. Letztere müssen getrennt gefertigt und später mit der Schaltschwinge wieder verbunden werden, wozu eine Steckverbindung vorgesehen ist.

Zweifellos muß die mit letztgenannter Ausführungsform angestrebte Leichtgängigkeit mit einer sehr aufwendigen Fertigung erkauft werden. Dies liegt u. a. an der speziellen Formgebung. Wie bereits gesagt, ist die vorgeschlagene Form des Schaltnockens nur durch ein separates Teil zu realisieren. In Betracht kommt insbesondere eine Ausführungsform als Façondrehteil, was natürlich aufwendig in der Herstellung ist. Die vorgeschlagene spezielle Formgebung ist aber auch aufwendig in der Montage, da die Schaltschwinge als Gußteil erst entsprechend nachbearbeitet, d. h. für eine Steckverbindung vorbereitet werden muß, wozu regelmäßig Bohren, Reiben und Entgraten zählen.

Gilt also schon eine Schwinggabel in der Ausführung als einstückiges Gußteil (wegen der obligatorischen mechanischen Nachbehandlung) als sehr aufwendig, so trifft dies erst recht für eine zweistückige Ausführungsform gemäß der DE-A-2 805 044 zu.

### Darstellung der Erfindung

Hier setzt nun die Erfindung an. Sie will eine Schwinggabel der eingangs genannten Art vorschlagen, welche sich bei unverminderter Zuverlässigkeit einfacher und preiswerter herstellen läßt.

Gelöst wird diese Aufgabe nach dem Vorschlag der Erfindung dadurch, daß der Schaltnocken mit der zapfenförmigen Verlängerung zu einem Preßsitz in die Ausnehmung der Schwinggabel eingedrückt ist und daß die Schwinggabel aus einem kaltverformbaren Bandstahl gebogen ist, während der Schaltnocken ein gehärtetes Feinstanzteil ist.

Wie ersichtlich, sind jetzt Schwinggabel und Schaltnocken zunächst wieder selbständige Teile, welche dank ihrer Ausformung einfach durch Krafteinwirkung (Preßsitz) bei der Montage dauerhaft miteinander verbunden werden können. Ferner wurde erkannt, daß die Bestandteile sehr einfach strukturiert sein können und sich als preiswerte Formteile, nämlich Preß-, Biege- oder Stanzteile gewinnen lassen. Insbesondere zeigt die Erfindung die Möglichkeit auf, die einzelnen Bestandteile gemäß ihrer tatsächlichen Beanspruchung nach Material und Herstellungsweise auch unterschiedlich und damit preiswerter zu fertigen.

Bei alledem entfällt ein Nachbearbeiten, da sich solche Bestandteile, einschließlich der Ausnehmung, äußerst maßgenau herstellen lassen. Die zapfenförmige Verlängerung des Schaltnockens sowie die entsprechende Ausnehmung der Schwinggabel weisen in aller Regel einen (recht)eckigen Querschnitt auf, was eine einwandfreie Ausrichtung sowie einen Verdreh- und Ausziehwiderstand bedeutet.

Somit kann zusammenfassend festgestellt werden, daß die Erfindung eine sehr taugliche Lösung für die Praxis angibt. Der vorgeschlagene Preßsitz wirkt als Garant für genaue Lage und Maßhaltigkeit, ohne die Gefahr eines Versatzes oder Verzuges. Bei einer im übrigen einfacheren und preiswerteren Herstellung der Schwinggabel ist ein Schalten frei von Betriebsstörungen gewährleistet.

Die Haltbarkeit und Sicherheit wird noch wesentlich erhöht, wenn der Schaltnocken entlang seinem Preßsitz mit der Schwinggabel verschweißt ist. Dies ist wohl die Ausführungsform, welche bevorzugt zur Anwendung kommen dürfte. Bekanntlich führt das Verschweißen zu einer besonders wirksamen Verbindung; es kann jedoch hier erst Gebrauch davon gemacht werden, nachdem mittels des Preßsitzes eine äußerst maßgenaue Positionierung des Schaltnockens gelungen ist.

Die Arbeitsweise (Genauigkeit) herkömmlicher Schweißmaschinen allein dürfte für die hier geforderte Maßhaltigkeit nicht genügen. So wird für die Position des Schaltnockens regelmäßig ein sehr enger Toleranzbereich vorgegeben, beispielsweise von plus/minus 0,05 mm. Innerhalb solcher Grenzen würde sich ein loser Schaltnocken nicht mehr ohne weiteres genügend genau positionieren lassen.

Als Schweißverfahren kommt insbesondere ein Lichtbogenschweißen in Betracht. Damit kann eine Aushärtung verbunden sein, was für den Schaltnocken durchaus erwünscht ist. Genauer gesagt, erfolgt unter Ausnutzung der Restwärme vom Schweißen eine Induktionshärtung (als Oberflächenvergütung).

Zweckmäßigerweise ist die Ausnehmung aus der Schulter der Schwinggabel ausgestanzt. Damit ist eine präzise Aufnahme für den Schaltnocken gegeben, welche schnell und preiswert herzustellen ist.

### Kurze Beschreibung der Zeichnung

Weitere Einzelheiten und Vorteile der Erfindung sollen nachstehend anhand der Zeichnung für ein bevorzugtes Ausführungsbeispiel beschrieben werden. Darin zeigen:
- Fig. 1: eine erfindungsgemäße Schwinggabel mit Lagerbock in Seitenansicht,
- Fig. 2: die Schwinggabel ohne Lagerbock im Schnitt entlang der Linie II - II von Fig. 1,
- Fig. 3: einen Abschnitt der Schwinggabel samt Schaltnocken in Draufsicht und
- Fig. 4: den Gegenstand von Fig. 3 im Schnitt entlang der Linie IV - IV.

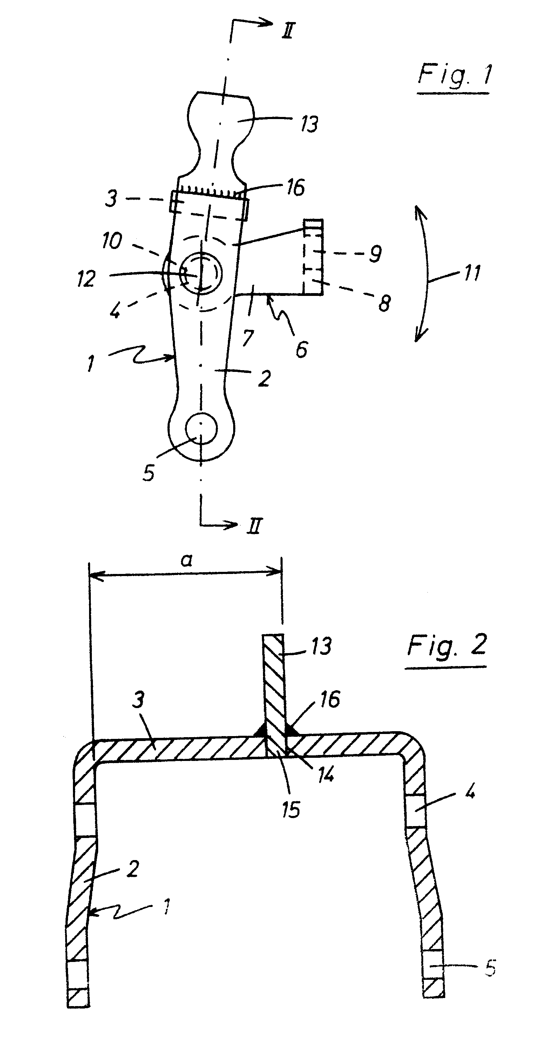

Nach den Fig. 1 und 2 besteht eine erfindungsgemäße Schwinggabel 1 aus zwei Seitenteilen 2, welche über eine gemeinsame Schulter 3 U-förmig miteinander verbunden sind. Im Abstand zur Schulter 3 sind in den Seitenteilen 2 jeweils eine obere Bohrung 4 sowie eine untere Bohrung 5 angebracht. Dabei dienen die beiden oberen Bohrungen 4 zur Anlenkung eines Lagerbockes 6 von ebenfalls etwa U-förmiger Gestalt, nämlich mit Seitenteilen 7 und einer Schulter 8.

Die Schulter 8 weist Befestigungslöcher 9 auf. Die Seitenteile 7 sind mit Bohrungen 10, entsprechend den Bohrungen 4, versehen. Der Lagerbock 6 ist so bemessen, daß er spannungsfrei zwischen die Seitenteile 2 der Schwinggabel 1 eingesetzt werden kann und sich in Richtung des Doppelpfeiles 11 leicht drehen läßt. Dabei gerät er bereits unter dem Einfluß seines Eigengewichts in die unterste Stellung. Die Beweglichkeit und Sicherung des Lagerbockes 6 an der Schwinggabel 1 ist durch Zylinderstifte 12 gewährleistet, welche von innen nach außen in die Bohrungen 10 und 4 eingepreßt und danach verstemmt worden sind.

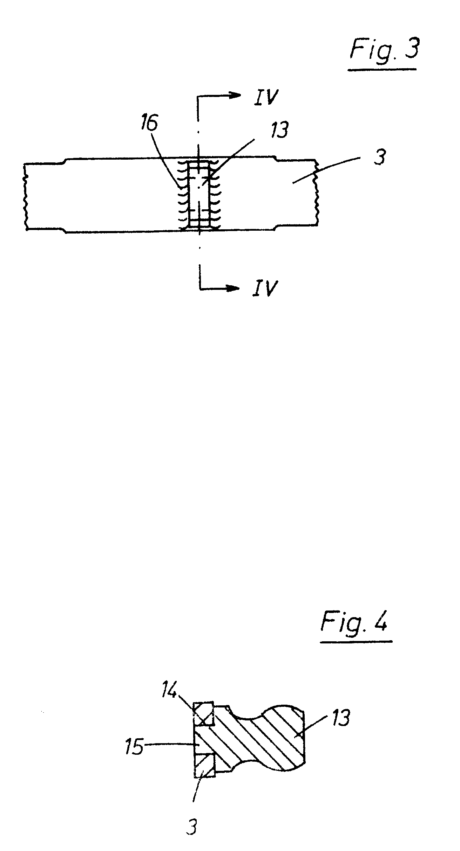

Wie insbesondere Fig. 2 in Verbindung mit den Fig. 3 und 4 erkennen läßt, tragt die Schulter 3 der Schwinggabel 1 einen rechtwinklig abstehenden Schaltnocken 13. Letzterer ist ein Feinstanzteil, welches im Hinblick auf seine besondere Beanspruchung noch vergütet (gehärtet) wurde. Dagegen ist die übrige Schwinggabel 1 einfach aus kaltverformbarem Bandstahl gebogen. Außer auf eine besondere Beständigkeit kommt es beim Schaltnocken 13 auch auf äußerste Maßhaltigkeit an. Insbesondere der mit a bezeichnete Abstand zwischen dem Schaltnocken 13 und dem einen Seitenteil 2 muß in engsten Toleranzen gewahrt bleiben.

Hierfür sorgen eine Ausnehmung 14 in der Schulter 3 der Schwinggabel 1 von rechteckigem Querschnitt sowie eine zapfenförmige Verlängerung 15 am unteren Ende des Schaltnockens 13, welche in Form und Abmessung der Ausnehmung 14 derart entspricht, daß beim Eintreiben der Verlängerung 15 in die Ausnehmung 14 ein dauerhafter Preßsitz für den Schaltnocken 13 zustandekommt. Zusätzich ist der Schaltnocken 13 an der Schulter 3 mit der Schwinggabel 1 verschweißt, was mit Schweißnähten 16 beidseits des Schaltnockens 13 dargestellt ist.

## Patentansprüche

1. Schwinggabel für Schaltgetriebe von Kraftfahrzeugen, welche im wesentlichen U-förmig ausgebildet ist, wobei sie mit ihren beiden Seitenteilen ( 2 ) gelenkig mit einem Lagerbock ( 6 ) verbunden ist und an ihrer Schulter ( 3 ) einen rechtwinklig abstehenden Schaltnocken ( 13 ) aufweist und wobei die Schwinggabel ( 1 ) an ihrer Schulter ( 3 ) mit einer Ausnehmung ( 14 ) versehen ist und der Schaltnocken ( 13 ) an seinem unteren Ende eine zapfenförmige Verlängerung ( 15 ) aufweist, dadurch gekennzeichnet, daß der Schaltnocken ( 13 ) mit der zapfenförmigen Verlängerung ( 15 ) zu einem Preßsitz in die Ausnehmung ( 14 ) der Schwinggabel ( 1 ) eingedrückt ist und daß die Schwinggabel ( 1 ) aus einem kaltverformbaren Bandstahl gebogen ist, während der Schaltnocken ( 13 ) ein gehärtetes Feinstanzteil ist.

2. Schwinggabel nach Anspruch 1, dadurch gekennzeichnet, daß der Schaltnocken ( 13 ) entlang seinem Preßsitz mit der Schwinggabel ( 1 ) verschweißt ist.

3. Schwinggabel nach Anspruch 1, dadurch gekennzeichnet, daß die Ausnehmung ( 14 ) aus der Schulter ( 3 ) ausgestanzt ist.

## Claims

1. Rocker fork for motor vehicle shift transmissions which is constructed substantially in a U-shape, in which it is articulatedly connected by its two side pieces (2) with a bearing block (6) and has on its shoulder (3) a trip cam (13) projecting at right angles and in which the rocker fork (1) is provided on its shoulder (3) with a recess (14) and the trip cam (13) has at its lower end a cone-shaped extension (15), characterised in that the trip cam (13) with the cone-shaped extension (15) is pressed in a force fit into the recess (14) of the rocker fork (1) and that the rocker fork (1) is bent from a cold-deformable band steel, whereas the trip cam (13) is a hardened fine stamping.

2. Rocker fork according to claim 1, characterised in that the trip cam (13) is welded with the rocker fork (1) along its force fit.

3. Rocker fork according to claim 1, characterised in that the recess (14) is punched out from the shoulder (3).

## Revendications

1. Fourchette pivotante pour boîtes de vitesses de véhicules automobiles, laquelle est réalisée pour l'essentiel en forme de U, cependant qu'elle est reliée à un support (6) d'une manière articulée par ses deux parties latérales (2), qu'elle présente sur sa semelle (3) une came de changement de vitesses (13) en saillie à angle droit, que la fourchette pivotante (1) est munie sur sa semelle (3) d'un évidement (14) et que la came de changement de vitesses (13) présente à son extrémité inférieure un prolongement (15) en forme de tenon, caractérisée par le fait que la came de changement de vitesses (13), par le prolongement (15) en forme de tenon, est enfoncée dans l'évidement (14) de la fourchette pivotante (1) en présentant un ajustement serré, et par le fait que la fourchette pivotante (1) est obtenue par pliage d'une bande d'acier déformable à froid, tandis que la came de changement de vitesses (13) est une pièce obtenue par découpage de précision qui a été durcie.

2. Fourchette pivotante selon la revendication 1, caractérisée par le fait que la came de changement de vitesses (13) est soudée à la fourchette pivotante (1) le long de son ajustement serré.

3. Fourchette pivotante selon la revendication 1, caractérisée par le fait que l'évidement (14) est découpé par estampage dans la semelle (3).
